# EUROPEAN PATENT APPLICATION

(11) **EP 2 413 544 A1**
(43) Date of publication of application: **01.02.2012**
(21) Application number: 10755431.3
(22) Date of filing: 24.03.2010
(51) Int. Cl.: H04L 12/56

(54) **METHOD FOR REALIZING IPV6 HOST VISTING IPV4 HOST, METHOD FOR OBTAINING IPV6 ADDRESS PREFIX AND TRANSLATION DEVICE**

(30) Priority: 26.03.2009 CN 200910106354; 29.09.2009 CN 200910204110
(71) Applicant: Huawei Technologies Co., Ltd., Longgang District, Shenzhen Guangdong 518129 (CN)
(72) Inventor: XU, Xiaohu, Shenzhen Guangdong 518129 (CN); WANG, Xuewei, Shenzhen Guangdong 518129 (CN)
(74) Representative: Barth, Stephan Manuel
(86) International application number: PCT/CN2010/071246
(87) International publication number: WO 2010/108431

(57) **Abstract**

The present invention relates to the communication field, and in particular, to a method for enabling an Internet Protocol version 6 (IPv6) host to access an Internet Protocol version 4 (IPv4) host, a method for obtaining an IPv6 address prefix, and a translation apparatus. The method includes: obtaining, by a source host, an address prefix used for translating an IPv4 address into an IPv6 address; and translating, by a source host, an IPv4 address into an IPv6 address. The translation apparatus includes: a prefix obtaining unit and an address translating unit. The prefix obtaining unit is adapted to obtain an address prefix used for translating an IPv4 address into an IPv6 address, and the address translating unit is adapted to perform translation between IPv4 and IPv6 addresses.

## Description

This application claims priority to Chinese Patent Application No. 200910106354.3, filed with the Chinese Patent Office on March 26, 2009 and entitle "METHOD FOR ENABLING IPV6 HOST TO ACCESS IPV4 HOST, METHOD FOR OBTAINING IPV6 ADDRESS PREFIX, AND TRANSLATION APPARATUS", and Chinese Patent Application No. 200910204110.9, filed with the Chinese Patent Office on September 29, 2009 and entitled "METHOD FOR ENABLING IPV6 HOST TO ACCESS IPV4 HOST, METHOD FOR OBTAINING IPV6 ADDRESS PREFIX, AND TRANSLATION APPARATUS", which are incorporated herein by reference in their entirety.

### FIELD OF THE INVENTION

The present invention relates to the communication field, and in particular, to a method for enabling an Internet Protocol version 6 (IPv6) host to access an Internet Protocol version 4 (IPv4) host, a method for obtaining an IPv6 address prefix, and a translation apparatus.

### BACKGROUND OF THE INVENTION

Network Address Translation-Protocol Translation (NAT-PT) [RFC 2766] is a technology for translating packet headers and semantics between IPv4 packets and IPv6 packets during IPv4/IPv6 Network Address Translation (NAT), and is applicable to communication between IPv4-only sites and IPv6-only sites. For some upper-layer protocols embedded with address information such as the File Transfer Protocol (FTP), a NAT-PT device needs to collaborate with an application-layer gateway to complete translation. The NAPT-PT function can be implemented by using port information on the basis of the NAT-PT device.

In the NAT-PT device, a solution for enabling an IPv6 host to access an IPv4 host is: An IPv6 host sends a Domain Name System (DNS) Query request for the IPv4 or IPv46 address corresponding to the Fully Qualified Domain Name (FQDN) of the destination host. The DNS Query request passes through the NAT-PT device and then is sent to a DNS sever in an IPv4 domain. The DNS server carries in a DNS response the IPv4 address corresponding to the destination host, for example, carries the IPv4 address in the A record of the DNS. When the DNS response passes through the NAT-PT device, the IPv4 address (the A record) in the DNS response is translated by the DNS-ALG into an IPv6 address (an A6/AAAA record) unconditionally because a DNS Application Level Gateway (DNS-ALG) on the NAT-PT device does not record the DNS query status.

However, in some application scenarios, the IPv6 host in the IPV6 domain may expect to obtain the IPv4 address of the destination host or has obtained the IPv4 address of the destination host. For example, the IPv6 host is a dual-stack host (supporting both IPv4 and IPv6), and expects to learn the real address of the destination host (regardless of an IPv4 address or an IPv6 address). If the real address of the destination host is an IPv4 address, a session is set up through IPv4; if the real address of the destination host is an IPv6 address, a session is set up through IPv6. However, when the DNS-ALG is adopted, the DNS-ALG translates the IPv4 address (the A record) in the DNS response into an IPv6 address (the A6/AAAA record) by default, which means that the destination host is disguised by the DNS-ALG as an IPv6 host. That is, even if the destination host is an IPv4 host, the source host may only communicate with the destination host through IPv6., In this case, when a protocol packet arrives at the NAT-PT device for translation, some information may be lost because the formats of IPv4 and IPv6 packet headers are incompatible.

In another case, the IPv6 host in the IPv6 domain may already obtain the IPv4 address of the destination host by other means, and not via the DNS-ALG In this case, the host cannot obtain the IPv6 address of the destination host. For example, seed address information provided by a Peer-To-Peer (P2P) system for the IPv6 host in the IPv6 domain is transmitted over the P2P protocol. If the seed information provided by the P2P system for the IPv6 host is an IPv4 address, the DNS-ALG cannot capture the information, and thus cannot perform address translation. For another example, the IPv6 host in the IPv6 domain obtains the IPv4 address of the destination host from the local DNS server, and the DNS message does not pass through the DNS-ALG

### SUMMARY OF THE INVENTION

Embodiments of the present invention provide a method for enabling an IPv6 host to access an IPv4 host, a method for obtaining an IPv6 address prefix, and a translation apparatus to solve the problem that it is difficult to enable an IPv6 host to completely access an IPv4 host without the DNS-ALG

An implementation of an embodiment of the present invention for solving the preceding technical problem is as follows: A method for enabling an IPv6 host to access an IPv4 host includes: obtaining, by a source host, an address prefix used for translating an IPv4 address into an IPv6 address; and translating, by a source host, an IPv4 address of a destination IPv4 host into an IPv6 address locally, where the obtaining of the address prefix used for translating an IPv4 address into an IPv6 address includes statically configuring an address prefix used for translating an IPv4 address into an IPv6 address on the source host, or receiving a message that carries an address prefix used for translating an IPv4 address into an IPv6 address.

Another implementation of an embodiment of the present invention for solving the preceding technical problem is as follows: A translation apparatus includes
a prefix obtaining unit, adapted to obtain an address prefix used for translating an IPv4 address into an IPv6 address; and
an address translating unit, adapted to perform translation between an IPv4 address and an IPv6 address according to the address prefix obtained by the prefix obtaining unit;
where the obtaining of the address prefix used for translating an IPv4 address into an IPv6 address includes: statically configuring, on a source host, an address prefix used for translating an IPv4 address into an IPv6 address; or
receiving a message that carries an address prefix used for translating an IPv4 address into an IPv6 address.

Another implementation of an embodiment of the present invention for solving the preceding technical problem is as follows: A method for obtaining an address prefix used for translating an IPv4 address into an IPv6 address includes: extending an option field of a Router Advertisement (RA) packet, storing the address prefix used for translating an IPv4 address into an IPv6 address in the extended option field of the RA packet, and sending, by a router, the address prefix to a source host.

With the method and apparatus provided in embodiments of the present invention, the DNS-ALG is not required to translate an IPv4 address into an IPv6 address, and the translation process is completed by the IPv6 host. When the IPv6 host in the IPv6 domain is a dual-stack host, the IPv6 host may obtain the IPv4 address of the destination host and directly use the IPv4 address to communicate with the destination host. For the IPv6-only host, translation from the IPv4 address to the IPv6 address can be implemented locally by using the above methods, thus avoiding a series of problems caused by address translation through the DNS-ALG.

### BRIEF DESCRIPTION OF THE DRAWINGS

FIG. 1 is a schematic flowchart of a method for enabling an IPv6 host to access an IPv4 host according to an embodiment of the present invention;

FIG. 2 is a format of an option field according to an embodiment of the present invention;

FIG. 3 is a schematic diagram of a format of TLV_AFT_PREFIX_OSPFv2 according to an embodiment of the present invention;

FIG. 4 is a schematic diagram of a format of TLV_AFT_PREFIX_OSPFv3 according to an embodiment of the present invention;

FIG 5 is a schematic diagram of a format of TLV_AFT_PREFIX_ISIS according to an embodiment of the present invention;

FIG 6 is a schematic diagram of an option format when an address prefix is of any length according to an embodiment of the present invention;

FIG 7 is a schematic flowchart of a method for enabling an IPv6 host to access an IPv4 host according to an embodiment of the present invention;

FIG 8 is a schematic structure diagram of a translation apparatus 300 according to an embodiment of the present invention; and

FIG. 9 is a schematic structure diagram of a translation apparatus according to another embodiment of the present invention.

### DETAILED DESCRIPTION OF THE EMBODIMENTS

The implementation process of the present invention is described below with reference to exemplary embodiments.

During the research, the inventor finds that, in view of the above technical problem, a mechanism, rather than a DNS-ALG on a NAT-PT device, is required to enable an IPv6 host to locally translate the IPv4 address of a destination host into an IPv6 address. For example, if the source host is an IPv6-only host, and the destination host is an IPv4-only host, the source host may locally translate the IPv4 address of the destination IPv4 host into an IPv6 address. However, the source host needs to learn the prefix configured on the NAT-PT device and used for translating an IPv6 address into an IPv4 address (or translating an IPv4 address into an IPv6 address), and add the prefix used for translating an IPv4 address into an IPv6 address in front of the IPv4 address of the destination host to form an IPv6 address. In embodiments of the present invention, the prefix may be a 96-bit prefix (96/prefix) or any other IPv6 address prefix, such as a 32-bit prefix (32/prefix) or a 64-bit prefix (64/prefix), or any prefix shorter than 96 bits, or any other prefix of random length.

The solution of the embodiments of the present invention enables the IPv6 host in the IPv6 domain to obtain the address prefix used for translating the IPv4 address of a destination IPv4-only host into an IPv6 address, so that the translation from the IPv4 address of the destination IPv4-only host into the IPv6 address is implemented on the host, thus avoiding a series of problems caused by use of the DNS-ALG.

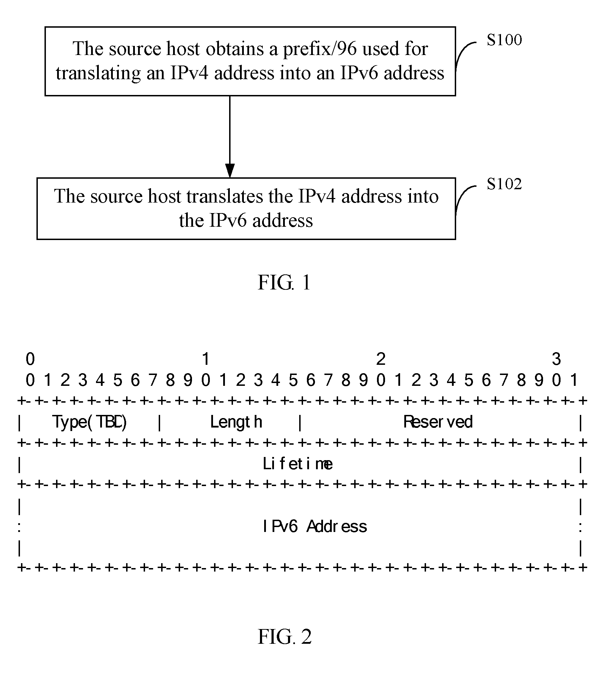

As shown in FIG 1, taking the 96/prefix as an example, the method for enabling an IPv6 host to access an IPv4 host includes the following steps:

In step S100, the source host obtains a 96/prefix used for translating an IPv4 address into an IPv6 address.

Specifically, the prefix may be obtained in static configuration mode or may be obtained by receiving a message that carries a 96/prefix used for translating an IPv4 address into an IPv6 address, where the static configuration mode includes manually configuring, on the source host, a 96/prefix used for translating an IPv4 address into an IPv6 address.

In step S102, the source host translates the IPv4 address into the IPv6 address.

The source host, according to the obtained 96/prefix used for translating an IPv4 address into an IPv6 address, adds the 96/prefix in front of the IPv4 address of the destination host to form an IPv6 address96/prefix.

In step S100, by receiving a message that carries a 96/prefix used for translating an IPv4 address into an IPv6 address, the source host may also obtain the 96/prefix used for translating an IPv4 address into an IPv6 address96/prefix. The prefix may be obtained in the following ways:

(1) In an embodiment of the present invention, by receiving an extended RA packet, the source host obtains a 96/prefix used for translating an IPv4 address into an IPv6 address The RA packet carries a 96/prefix used for translating an IPv4 address into an IPv6 address. An option is added to the RA packet, and the option carries a 96/prefix. The newly defined option may be named as "Address Translation Prefix (ATP) option", which transmits the prefix, which is configured on the NAT-PT device and used for translating an IPv6 address into an IPv4 address, to the source host. The new option (ATP option) is stored in a variable field of the RA packet.

FIG. 2 is a format of the option field, where definitions of some fields are as follows:

Type: 8-bit unsigned integer, indicating the ATP option type.

Length: 8-bit unsigned integer. The length (including Type and Length fields) of the option is variable because the option may transmit one or more pieces of ATP information and each piece of ATP information includes two elements <IPv6 Address, Lifetime>.

IPv6 Address: 128-bit unsigned integer, indicating an IPv6 address prefix used for translating an IPv4 address into an IPv6 address. The IPv6 address and the subnet mask determine a unique IPv6 address prefix. If the prefix is a 96/prefix, the AND operation result of the IPv6 address and a 96-bit mask (FFFF:FFFF:FFFF:FFFF::FFFF:FFFF::0) indicates an IPv6 address 96/prefix.

Lifetime: 32-bit unsigned integer, indicating valid time of an ATP. Within the valid time, the ATP may be used for automatic translation from an IPv4 address into an IPv6 address. Before the ATP expires, the host may send a Router Solicitation (RS) to ensure validity of the ATP information. When the value of the field is 0xffffffff, it indicates the lifetime of the ATP is not limited. When the value is 0, it indicates the ATP is invalid and cannot be used any longer.

Another method for extending the RA packet is to use a DHCP Container (DHCPC) option. The DHCPC option is an RA option specially used for transmitting a DHCP option, and may include multiple DHCP options. In this way, the DHCPC option may be used for transmitting a DHCP option that carries an address prefix used for translating an IPv4 address into an IPv6 address.

The router obtains 96/prefix information used for translating an IPv4 address into an IPv6 address. The 96/prefix information used for translating an IPv4 address into an IPv6 address may be configured statically on the IPv6 router that supports the option. The 96/prefix is the prefix configured on the NAT-PT device and used for translating an IPv6 address into an IPv4 address. The NAT-PT device may also extend dynamic routing protocols to advertise the 96/prefix, for example, Open Shortest Path First (OSPF) and Intermediate System to Intermediate System (IS-IS). The router that receives the extended information may dynamically obtain the /96ATP used on the NAT-PT device. The router sends an RA message to the host periodically, where the message carries the above 96/prefix information, and the source host stores the prefix information after receiving the prefix information.

Extension of OSPFv2:

A new Type/Length/Value (TLV) may be defined for the Router Information Link State Advertisement (RI LSA) (RFC 4970), such as TLV_AFT_PREFIX_OSPFv2, to transfer the address prefix.

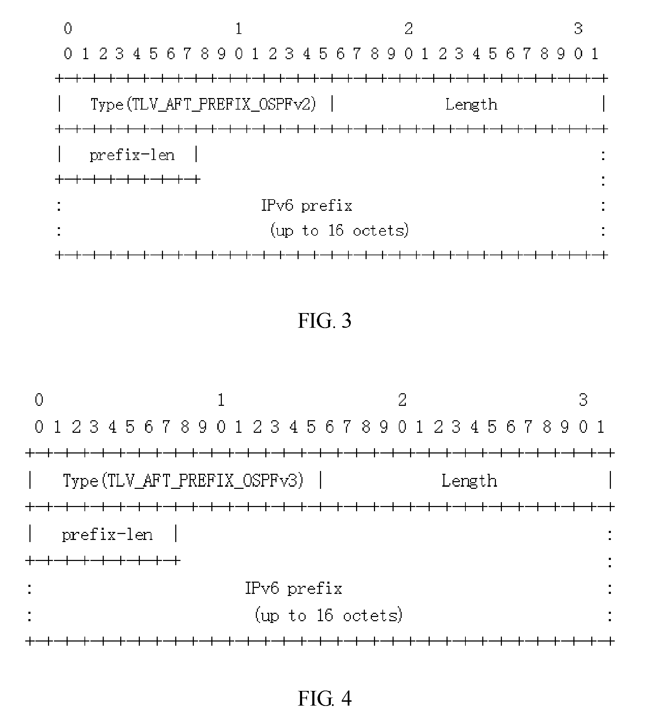

The format of the newly defined TLV_AFT_PREFIX_OSPFv2 is shown in FIG 3, where definitions of fields are as follows:

Type: TLV _AFT_PREFIX_OSPFv2.

Length: Length of the Value field, in bytes.

Value: The value is an 8-bit prefixlen field and an IPv6 prefix field. The length of the value field depends on the prefix length.

Extension of OSPFv3:

A new TLV TLV_AFT_PREFIX_OSPFv3 is defined for the RI LSA (RFC 4970) to transfer the address prefix.

The format of the newly defined TLV_AFT_PREFIX_OSPFv3 is shown in FIG. 4, where definitions of fields are as follows:

Type: TLV_AFT_PREFIX_OSPFv3.

Length: Length of the value field, in bytes.

Value: The value is an 8-bit prefix-len field and an IPv6 prefix field. The length of the value field depends on the prefix length.

Extension of ISIS:

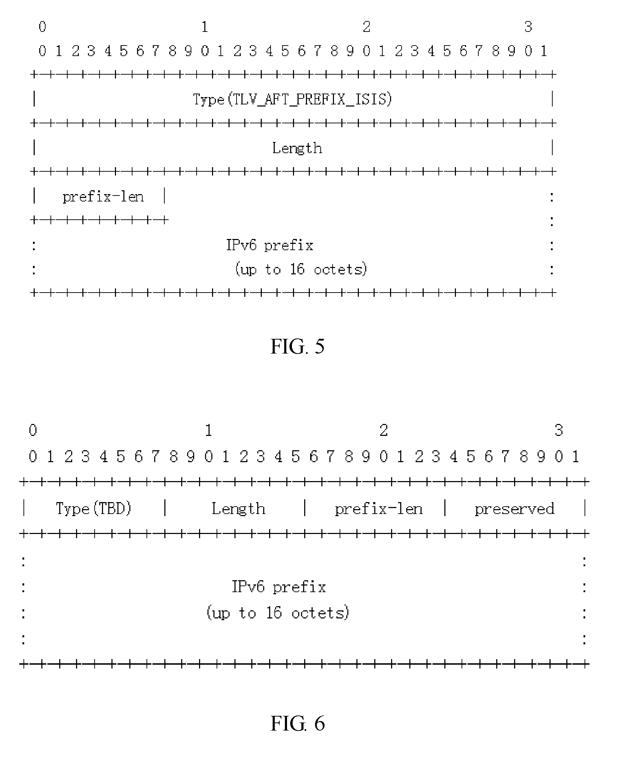

A new TLV type may be defined to add features for ISIS, and a new TLV TLV_AFT_PREFIX_ISIS may be defined to transfer the address prefix. The format of the newly defined TLV_AFT_PREFIX_ISIS is shown in FIG 5, where definitions of fields are as follows:

Type: TLV _AFT_PREFIX_ISIS.

Length: Length of the value field, in bytes.

Value: The value is an 8-bit prefix-len field and an IPv6 prefix field. The length of the value field depends on the prefix length.

(2) On a Dynamic Host Configuration Protocol (DHCP) server, 96/prefix information is configured statically for translating an IPv4 address into an IPv6 address. The 96/prefix is a prefix configured on the NAT-PT device and used for translating an IPv6 address into an IPv4 address. When the IPv6 host obtains the IP address and network configurations dynamically through the DHCP server, the DHCP server stores the 96/prefix in the option field of the DHCP REPLY packet and sends the 96/prefix to the IPv6 host. After receiving the packet, the IPv6 host stores the 96/prefix.

When the IPv6 host needs to access an IPv4 host, the IPv6 host may obtain the IPv4 address of the destination host by other means, for example, through the DNS or P2P, and then add the 96/prefix obtained from the DHCP server in front of the IPv4 address of the destination host. In this way, the IPv4 address of the destination host is translated into the IPv6 address which serves as the destination IPv6 address of the IPv6 packet sent by the IPv6 host. When the IPv6 packet sent by the IPv6 host arrives at the NAT-PT device, the last 32 bits of the IPv6 address are used as the destination IPv4 address of the IPv4 packet after protocol translation because the 96/prefix is the prefix configured on the NAT-PT device and used for translating an IPv6 address into an IPv4 address. The obtained 96/prefix used for translating an IPv4 address into an IPv6 address is added in front of the IPv4 address of the destination host to form an IPv6 address.

The DHCP REPLY packet carries the 96/prefix, or a new ATP option may be defined in the option field of the DHCP REPLY packet to transmit the prefix configured on the NAT-PT device and used for translating an IPv6 address into an IPv4 address to the source host. The format of the ATP option in the option field of the DHCP REPLY packet may be the same as that of the ATP option in the above RA packet.

In the above embodiments of the present invention, when the IPv6 host needs to access an IPv4 host, the IPv6 host may obtain the IPv4 address of the destination host through a DNS or by other means. If the IPv4 address needs to be translated into an IPv6 address, the IPv6 host adds the obtained 96/prefix in front of the IPv4 address of the destination host. In this way, the IPv4 address of the destination host is translated into an IPv6 address, which serves as the destination IPv6 address of the IPv6 packet. When the packet arrives at the NAT-PT device, the last 32 bits of the IPv6 address are used as the destination IPv4 address of the IPv4 packet after protocol translation because the 96/prefix is the prefix configured on the NAT-PT device and used for translating an IPv6 address into an IPv4 address.

With the method provided in embodiments of the present invention, the DNS-ALG is not required to translate an IPv4 address into an IPv6 address, and the translation is completed by the IPv6 host. When the IPv6 host in the IPv6 domain is a dual-stack host, the IPv6 host can obtain the IPv4 address of the destination host and directly use the IPv4 address to communicate with the destination host. For the IPv6-only host, translation from the IPv4 address to the IPv6 address can be implemented locally on the source host by using the above methods, thus avoiding a series of problems caused by address translation through the DNS-ALG

The above method for enabling an IPv6 host to access an IPv4 host is described by taking the 96/prefix as an example. The address prefix may be of any length, for example, 32 bits or 64 bits, and is not limited to the described example. Accordingly, the option format may be shown in FIG 6, where definitions of fields are as follows:

Type: 8-bit unsigned integer, indicating the ATP option type.

Length: 8-bit unsigned integer. The length (including Type and Length fields) of the option is variable because the option may transfer one or more pieces of ATP information, and each piece of ATP information includes two elements <IPv6 Address, Lifetime>.

prefix-len: 8-bit unsigned integer, indicating the length of the IPv6 prefix.

IPv6 prefix: 128-bit unsigned integer, indicating an IPv6 address prefix used for translating an IPv4 address into an IPv6 address.

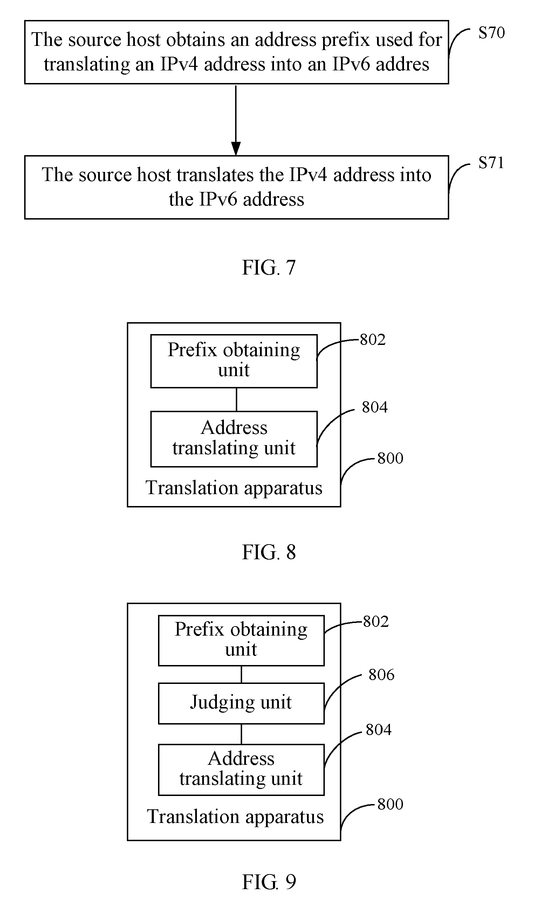

When the address prefix is of any length, a method for enabling an IPv6 host to access an IPv4 host is shown in FIG. 7. The method includes the following steps:

In step S70, the source host obtains an address prefix used for translating an IPv4 address into an IPv6 address.

Specifically, the prefix can be obtained in static configuration mode or by receiving a message that carries an address prefix used for translating an IPv4 address into an IPv6 address. The static configuration mode includes manually configuring an address prefix used for translating an IPv4 address into an IPv6 address on the source host.

In step S71, the source host translates the IPv4 address into the IPv6 address.

The source host adds the obtained address prefix, used for translating an IPv4 address into an IPv6 address, in front of the IPv4 address of the destination host to form an IPv6 address.

FIG 8 is a schematic structure diagram of a translation apparatus 800 according to an embodiment of the present invention. The translation apparatus 800 includes:
a prefix obtaining unit 802, adapted to obtain an address prefix used for translating an IPv4 address into an IPv6 address; and
an address translating unit 804, adapted to perform translation between an IPv4 address and an IPv6 address according to the address prefix obtained by the prefix obtaining unit 802.

Preferably, the address translating unit 804 is located on the host.

Preferably, as shown in FIG 9, the translation apparatus 800 may further include a judging unit 806. The judging unit 806 is adapted to determine whether it is necessary to translate the destination IPv4 address into an IPv6 address according to the address prefix obtained by the prefix obtaining unit. When the IPv6 host in the IPv6 domain is a dual-stack host, the IPv6 host can obtain the IPv4 address of the destination host and directly use the IPv4 address to communicate with the destination host without translating the IPv4 address into an IPv6 address. For the IPv6-only host, translation from the IPv4 address to the IPv6 address can be implemented locally on the source host by using the above methods.

Preferably, the address translation apparatus obtains the address prefix in static configuration mode or by receiving, by a host, a message that carries an address prefix used for translating an IPv4 address into an IPv6 address. The static configuration mode of obtaining the address prefix includes manually configuring, on the source host, an address prefix used for translating an IPv4 address into an IPv6 address. The method of receiving a message that carries an address prefix used for translating an IPv4 address into an IPv6 address is as follows: carrying the address prefix in the RA packet sent by the router, or pre-configuring, on the DHCP server, the address prefix used for translating an IPv4 address into an IPv6 address. When the host dynamically obtains network configuration information such as the IP address through DHCP, the DHCP server sends the address prefix in the new option field of the DHCP REPLY packet to the host that sends a request. After receiving the packet, the host stores the address prefix.

Before carrying the address prefix in the RA packet sent by the router, the method may further include: statically configuring, on the router, an address prefix used for translating an IPv4 address into an IPv6 address, or extending dynamic routing protocols (such as OSPF and IS-IS) to advertise the address prefix. The router that receives the extended information dynamically obtains the address prefix used on the NAT-PT device. The router sends an RA message that carries the above mentioned address prefix to the host periodically, and the host stores the address prefix after receiving the message.

Preferably, the above mentioned method embodiments and apparatus embodiments are not limited to the translation between IPv6 address and IPv4 address, and may also be applicable to translation between other protocol addresses.

The method embodiments for enabling an IPv6 host to access an IPv4 host with a 96/prefix or a prefix of any other length, for example, a 32/prefix or a 64/prefix, or any prefix shorter than 96 bits, or any other prefix of random length are similar to the method embodiments mentioned above. For details, refer to the method embodiments described above.

After reading the above mentioned embodiments, those skilled in the art may clearly learn that the embodiments of the present invention may be implemented through hardware, or, preferably in most circumstances, through software in addition to a necessary universal hardware platform. Based on such understandings, the essence of the technical solution of the present invention or the contributions to the prior art may be embodied in the form of a software product. The software product may be stored in a storage medium. The software product includes a number of instructions that enable a computer device (such as a personal computer, a server, or a network device) to execute the methods provided in the embodiments of the present invention.

The above descriptions are merely exemplary embodiments of the present invention, but not intended to limit the protection scope of the present invention. Any modifications, variations, or replacements that can be easily derived by those skilled in the art without departing from the technical conception shall fall within the scope of the present invention. Therefore, the protection scope of the present invention is subject to the appended claims.

## Claims

1. A method for enabling an Internet Protocol version 6 (IPv6) host to access an Internet Protocol version 4 (IPv4) host, comprising:
obtaining, by a source host, an address prefix used for translating an IPv4 address into an IPv6 address; and
translating, by a source host, an IPv4 address of a destination IPv4 host into an IPv6 address;
wherein the obtaining of the address prefix used for translating an IPv4 address into an IPv6 address comprises: statically configuring, on the source host, an address prefix used for translating an IPv4 address into an IPv6 address; or
receiving a message that carries an address prefix used for translating an IPv4 address into an IPv6 address.

2. The method of claim 1, wherein the receiving of the message that carries the address prefix used for translating an IPv4 address into an IPv6 address comprises:
receiving, by the source host, a Router Advertisement (RA) packet sent by a router; and
obtaining, by the source host, an address prefix carried in the RA packet and used for translating an IPv4 address into an IPv6 address.

3. The method of claim 2, wherein:
the address prefix used for translating an IPv4 address into an IPv6 address is carried in an extended option field of the RA packet.

4. The method of claim 2 or 3, wherein the source host receives the RA packet from the router periodically.

5. The method of any one of claims 1-4, wherein the address prefix used for translating an IPv4 address into an IPv6 address is: a 96-bit prefix (96/prefix), or a 32-bit prefix (32/prefix), or a 64-bit prefix (64/prefix).

6. A translation apparatus, comprising:
a prefix obtaining unit (802), adapted to obtain an address prefix used for translating an Internet Protocol version 4 (IPv4) address into an Internet Protocol version 6 (IPv6) address; and
an address translating unit (804), adapted to perform translation between an IPv4 address and an IPv6 address according to the address prefix obtained by the prefix obtaining unit (802);
wherein the obtaining of the address prefix used for translating an IPv4 address into an IPv6 address comprises: statically configuring an address prefix used for translating an IPv4 address into an IPv6 address; or
receiving a message that carries an address prefix used for translating an IPv4 address into an IPv6 address.

7. The apparatus of claim 6, wherein the address prefix used for translating an IPv4 address into an IPv6 address is: a 96-bit prefix (96/prefix), or a 32-bit prefix (32/prefix), or a 64-bit prefix (64/prefix).

8. The apparatus of claim 6, wherein the address translation apparatus is located on a source host.

9. The apparatus of claim 6 or 7, wherein the receiving of the message that carries the address prefix used for translating an IPv4 address into an IPv6 address comprises:
receiving a Router Advertisement (RA) packet sent by a router; and
obtaining an address prefix carried in the RA packet and used for translating an IPv4 address into an IPv6 address.

10. The apparatus of claim 8, wherein:
the address prefix used for translating an IPv4 address into an IPv6 address is carried in an extended option field of the RA packet.

11. The apparatus of any one of claims 6-8, wherein the apparatus further comprises a judging unit (806), adapted to determine whether it is necessary to translate a destination IPv4 address into an IPv6 address according to the address prefix obtained by the prefix obtaining unit (802).

12. A method for obtaining an address prefix used for translating an Internet Protocol version 4 (IPv4) address into an Internet Protocol version 6 (IPv6) address, comprising:
adding, by a router, the address prefix used for translating an IPv4 address into an IPv6 address to an extended option field of a Router Advertisement (RA) packet, and sending, by a router, the address prefix to a source host.

13. The method of claim 12, wherein before adding the address prefix used for translating an IPv4 address into an IPv6 address to the extended option field of the RA packet, the method further comprises:
receiving, by the router, an extended dynamic routing protocol packet, wherein the extended dynamic routing protocol packet carries the address prefix used for translating an IPv4 address into an IPv6 address;
or
statically configuring, on the router, an address prefix used for translating an IPv4 address into an IPv6 address.

14. The apparatus of claim 12, wherein the address prefix used for translating an IPv4 address into an IPv6 address is: a 96-bit prefix (96/prefix), or a 32-bit prefix (32/prefix), or a 64-bit prefix (64/prefix).
